Europäisches Patentamt

European Patent Office

Office européen des brevets

(19)

(11) EP 0 699 703 A1

## (12) DEMANDE DE BREVET EUROPEEN

(43) Date de publication:
06.03.1996 Bulletin 1996/10

(51) Int Cl.$^6$: **C08J 3/20**, C08J 3/12, C01F 11/18

(21) Numéro de dépôt: 95401941.0

(22) Date de dépôt: 24.08.1995

(84) Etats contractants désignés:
AT BE CH DE ES FR GB GR IT LI NL PT SE

(30) Priorité: 02.09.1994 FR 9410545

(71) Demandeur: RHONE-POULENC CHIMIE
F-92408 Courbevoie Cédex (FR)

(72) Inventeurs:
• Dupuis, Dominique
F-95170 Deuil la Barre (FR)

• Labarre, Dominique
F-92200 Neuilly sur Seine (FR)
• Mur, Gilles
F-94100 Saint Maur des Fosses (FR)

(74) Mandataire: Dubruc, Philippe et al
RHONE-POULENC CHIMIE,
Direction de la Propriété Industrielle,
25, Quai Paul Doumer
F-92408 Courbevoie Cédex (FR)

(54) **Particules composites et particules creuses de calcium carbonate**

(57) La présente invention concerne des particules composites à base de polymère organique et de carbonate de calcium, des particules creuses de carbonate de calcium ainsi que des suspensions de ces particules, leurs procédés de préparation et leur utilisation comme charges ou additifs dans les plastiques et les élastomères.

EP 0 699 703 A1

## Description

La présente invention concerne des particules composites à base de polymère organique et de carbonate de calcium, des particules creuses de carbonate de calcium et des suspensions de ces particules. Elle concerne également les procédés de préparation de ces particules et de ces suspensions, et leur utilisation comme charges ou additifs dans les plastiques et les élastomères.

Le carbonate de calcium est connu pour conférer aux matériaux thermoplastiques une bonne rigidité par introduction de particules à base de carbonate de calcium de l'ordre du micron dans le plastique. Ce dernier présente alors une tenue améliorée.

Cependant, on a constaté que les plastiques renforcés par du carbonate de calcium deviennent beaucoup plus cassants et que leur résistance aux chocs est affaiblie.

D'autre part, il est connu d'introduire dans les élastomères, et en particulier dans les élastomères pour pneumatiques, des charges minérales sous forme de particules de silice, de noir de carbone afin d'améliorer la résistance aux déchirures et à l'abrasion des élastomères. Mais alternativement, ces pneumatiques renforcés manquent de souplesse à basse température.

Un premier objet de l'invention est donc d'offrir un produit permettant de renforcer à la fois les propriétés de tenue aux chocs et de rigidité des plastiques ainsi qu'un procédé permettant de fabriquer ledit produit.

Un second objet de l'invention est d'offrir un produit permettant d'apporter de la souplesse aux élastomères à basse température ainsi qu'un procédé permettant de fabriquer ledit produit.

L'invention concerne donc tout d'abord des particules composites composées d'un coeur en polymère organique au moins en partie recouvert de carbonate de calcium de diamètre moyen d'au plus 5 μm.

L'invention couvre ensuite des particules creuses constituées d'une écorce en carbonate de calcium de diamètre moyen d'au plus 5 μm.

L'invention concerne également des suspensions des particules composites précédentes.

L'invention concerne enfin des suspensions des particules creuses précédentes.

Par ailleurs, l'invention concerne le procédé de préparation d'une suspension des particules composites précédentes caractérisé en ce qu'il comprend les étapes suivantes:

- on met en présence un latex avec du dihydroxyde de calcium,

- on ajoute du dioxyde de carbone au mélange de latex et de dihydroxyde de calcium obtenu précédemment ce par quoi du carbonate de calcium précipite sur les particules de latex.

L'invention concerne ensuite le procédé de préparation des particules composites caractérisé en ce qu'on sèche les suspensions obtenues par le procédé précédent.

L'invention concerne aussi le procédé de préparation des particules creuses. Selon un premier mode, le procédé est caractérisé en ce qu'on calcine les particules composites définies précédemment. Selon un second mode, le procédé est caractérisé en ce qu'on met ces mêmes particules composites dans un solvant du polymère organique, ce par quoi le coeur de polymère organique est dissous, on centrifuge le mélange et on sèche les particules creuses obtenues.

Enfin l'invention concerne l'utilisation des particules composites comme charges ou additifs dans les plastiques et les élastomères

L'invention couvre aussi l'utilisation des particules creuses comme charges dans les élastomères.

D'autres caractéristiques, détails et avantages de l'invention apparaîtront plus clairement à la lecture de la description et des exemples qui vont suivre.

L'invention concerne tout d'abord des particules composites composées d'un coeur en polymère organique au moins en partie recouvert de carbonate de calcium de diamètre moyen d'au plus 5 μm.

Plus précisément, les particules composites selon l'invention sont des particules de polymère organique dont la surface est recouverte au moins en partie d'un précipité de carbonate de calcium. Le carbonate de calcium peut recouvrir en partie seulement ou en totalité chaque coeur de polymère organique. Il est possible aussi que le carbonate de calcium soit en partie incrusté dans la couche périphérique externe du coeur en polymère organique.

Ces particules composites sont généralement de forme sphérique.

Le carbonate de calcium est habituellement sous forme calcite.

La nature des polymères organiques entrant dans la composition des particules composites est du type de celle de particules de latex, c'est-à-dire de particules de (co)polymères issues de procédés classiques de (co)polymérisation en émulsion de monomères organiques copolymérisables.

Parmi ces (co)polymères entrant dans la composition des particules composites, on peut citer notamment ceux issus de la polymérisation des monomères suivants :

a) : les (méth)acrylates d'alkyle, d'hydroalkyle, de chloroalkyle, les chloroacrylates d'alkyle ou d'hydroxyalkyle dont le radicale alkyle comporte de préférence de 1 à 18 atomes de carbone, tels que :

- (méth)acrylate de méthyle,

- (méth)acrylate d'éthyle ou hydroxyéthyle,

- (méth)acrylate de propyle ou hydroxypropyle,

- (méth)acrylate de n-butyle, d'isobutyle ou d'hydroxybutyle,

- (méth)acrylate d'amyle, de lauryle, d'isoamyle,

- (méth)acrylate de (2 éthyl-2 hexyle), d'éthyle, d'octyle, de méthyle, de butyle, de (diméthyl-3,3 butyle), d'isobutyle, d'isopropyle,

- (méth)acrylate de chloroéthyle,

- chloroacrylate de butyle, de méthyle, d'éthyle, d'isopropyle, de cyclohexyle,

- ...

b): les esters vinyliques ou allyliques d'acides carboxyliques saturés, linéaires ou ramifiés en $C_1$-$C_{12}$, tels que :

- acétate de vinyle,

- propionate de vinyle,

- butyrate de vinyle,

- acétate d'allyle,

- versatate® de vinyle (marque déposée pour des esters d'acides $\alpha$-ramifiés en $C_9$-$C_{11}$),

- laurate de vinyle,

- benzoate de vinyle,

- triméthylacétate de vinyle,

- pivalate de vinyle,

- trichloroacétate de vinyl,

- ...

c): les esters et les hemi-esters d'acides polycarboxyliques $\alpha,\beta$-éthyléniquement insaturés ayant de 4 à 24 atomes de carbone, tels que :

- le fumarate de méthyle, de diméthyle, d'éthyle, de butyle, de 2-éthyl hexyle,

- maléate de méthyle, de diméthyle, d'éthyle, de butyle, de 2-éthyl hexyle,

- ...

d): les halogénures vinyliques tels que :
    - chlorure, fluorure de vinyle, de vinylidène, vinylidène,...

e): les oléfines fluorées telles que le tetrafluoroéthylène,...

f): les vinyl aromatiques présentant de préférence au plus 24 atomes de carbone et choisis en particulier parmi :

- styrène,

- $\alpha$-méthylstyrène, 4-méthylstyrène, 2-méthylstyrène, 3-méthylstyrène,

- 4-méthoxystyrène,

- 2-hydroxyméthylstyrène,

- 4-éthylstyrène,

- 4-éthoxystyrène,

- 3,4 diméthylstyrène,

- 2-chlorostyrène, 3-chlorostyrène,

- 4-chloro-3 méthylstyrène,

- 4-tert-butylstyrène,

- 4-dichlorostyrène, 2,6-dichlorostyrène, 2,5-difluorostyrène,

- 1-vinylnaphtalène,

- vinyltoluène,

- ...

g): les diènes aliphatiques conjugués présentant de préférence de 3 à 12 atomes de carbone tels que

- 1,3-butadiène,

- isoprène,

- 2-chloro-1,3 butadiène

- ...

h): les nitriles $\alpha$-$\beta$-éthyléniquement insaturés ayant de préférence de 3 à 6 atomes de carbone tels que l'acrylonitrile et le méthacrylonitrile.

Il est possible de copolymériser certains de ces monomères principaux avec jusqu'à 10% en poids d'autres monomères, dits comonomères, à caractère ionique, tels que :

- les monomères acides carboxyliques $\alpha$,$\beta$-éthyléniquement insaturés mentionnés ci-dessus incluant les acides mono et polycarboxyliques tels que :

    . acide acrylique,

    . acide méthacrylique,

    . acide maléique,

    . acide itaconique,

. acide fumarique,

. acide crotonique,...

- les monomères éthyléniques comportant des groupes amines secondaires, tertiaires ou quaternisées tels que : vinyl-pirydines, diéthyl-aminoéthylméthacrylate,...

- les monomères éthyléniques sulfonés tels que : vinylsulfonate, styrène-sulfonate,...

- les monomères éthyléniques Zwitterionique tels que : acrylate de sulfopropyl-(diméthylamino-propyle),...

- les amides d'acides carboxyliques insaturés tels que : acrylamide, méthacrylamide,...

- les esters de (méth)acrylates et d'alcools polyhydroxypropyles ou polyhydroxyéthylés.

Il est possible aussi d'utiliser dans le cadre de la présente invention des polymères anioniques, tels que le polyacétate de vinyl, ou des polymères amphotères.

On peut mentionner plus particulièrement les copolymères du styrène avec les acrylates. Ils pourront avantageusement être choisis parmi les copolymères butadiènestyrène possédant des fonctions carboxylées, sulfates ou sulfonates et les copolymères butadiène - styrène - acrylamide.

Dans les particules composites selon l'invention, le polymère organique sera choisi préférentiellement parmi les polymères organiques présentant un taux de fonctions carboxylées compris entre 1 et 50% en masse de monomères ionogènes présents dans le polymère organique et un taux de fonction amides inférieur à 5% en masse de monomères ionogènes présents dans le polymère organique.

Ces polymères organiques auront généralement une température de transition vitreuse comprise entre -80°C et 200°C.

Ces particules composites présentent habituellement un indice de dispersion d'au plus 0,50 et de préférence inférieur à 0,30.

L'indice de dispersion est déterminé, ici et pour tous les autres indices de dispersion définis dans les texte, par la formule :

$$I = \frac{\varnothing_{84} - \varnothing_{16}}{2\varnothing_{50}}$$

dans laquelle :

- $\varnothing_{84}$ est le diamètre des particules pour lequel 84% des particules ont un diamètre inférieur à $\varnothing_{84}$,

- $\varnothing_{16}$ est le diamètre des particules pour lequel 16% des particules ont un diamètre inférieur à $\varnothing_{16}$,

- $\varnothing_{50}$ est le diamètre moyen des particules.

L'indice de dispersion est mesuré par microscopie électronique par transmission (MET).

Les particules composites selon l'invention ont un diamètre moyen d'au plus 5 μm. De même, il est habituellement d'au moins 0,04 μm et de préférence compris entre 0,1 et 0,3 μm. La détermination du diamètre moyen de ces particules, et de toutes les autres particules définies dans le texte, est réalisée par MET.

Le diamètre du coeur de polymère organique est habituellement compris entre 0,04 et 5 μm. L'épaisseur de l'écorce ou de la couche en carbonate de calcium est généralement au plus de 200 nm. De même, elle est habituellement au moins de 1 nm, de préférence au moins de 5 nm et plus préférentiellement comprise entre 5 et 70 nm.

Les dimensions données ci-dessus le sont à titre purement indicatifs car il peut être plus ou moins difficile de déterminer précisément la taille du coeur de polymère organique et l'épaisseur du carbonate de calcium dans la mesure où, comme indiqué précédemment, ce dernier peut être incrusté dans la couche périphérique externe du coeur en polymère organique du fait que le polymère organique est mou et déformable. Dans le cas où le polymère organique est mou, par exemple s'il se trouve à une température supérieure à sa température de transition vitreuse, le carbonate de calcium pourra s'y incruster. Les mesures de la taille du coeur de polymère organique et de l'épaisseur du carbonate de calcium seront donc modifiées du fait de l'existence d'une couche intermédiaire issue de l'interaction entre le polymère organique et le carbonate de calcium.

Les particules composites selon l'invention présentent de préférence une surface spécifique comprise entre 1 et 100 m²/g.

On entend par surface spécifique, la surface spécifique BET déterminée par adsorption d'azote conformément à la norme ASTM D 3663-78 établie à partir de la méthode BRUNAUER - EMMETT - TELLER décrite dans le périodique "The Journal of the american Society", 60, 309 (1938).

Cette surface spécifique peut révéler l'aspect plus ou moins lisse de la couche de carbonate de calcium sur le polymère organique.

L'invention concerne ensuite des particules creuses constituées d'une écorce en carbonate de calcium de diamètre moyen d'au plus 5 µm.

L'épaisseur de l'écorce en carbonate de calcium est généralement au plus de 200 nm. De même, elle est habituellement au moins de 1 nm, de préférence au moins de 5 nm et plus préférentiellement comprise entre 5 et 70 nm.

Ces particules sont généralement de forme sphérique.

Le carbonate de calcium est de préférence sous forme calcite.

Ces particules creuses présentent habituellement un indice de dispersion d'au plus 0,50 et de préférence inférieur à 0,30.

Ces particules creuses ont un diamètre moyen d'au plus 5 µm. De même, il est habituellement d'au moins 0,04 µm et de préférence compris entre 0,1 et 0,3 µm.

Ces particules creuses présentent de préférence une surface spécifique comprise entre 1 et 100 $m^2$/g.

L'invention concerne aussi des suspensions comprenant les particules composites composées d'un coeur en polymère organique au moins en partie recouvert de carbonate de calcium.

Dans certains cas, ces suspensions seront des dispersions colloïdales. On entend par dispersion colloïdale et pour toute la description, tout système constitué de fines particules de dimensions colloïdales de polymère organique recouvertes de carbonate de calcium, en suspension dans une phase liquide notamment aqueuse. On notera que le carbonate de calcium peut se trouver soit totalement dans les colloïdes, soit simultanément sous forme d'ions et dans les colloïdes, sans toutefois que la proportion représentée par la forme ionique n'excède 10% environ du total du carbonate de calcium dans la dispersion colloïdale. Dans l'invention, on met de préférence en oeuvre des dispersions colloïdales dans lesquelles le carbonate de calcium est totalement dans les colloïdes.

Comme indiqué précédemment, il est possible aussi que le carbonate de calcium soit en partie incrusté dans la couche périphérique externe du coeur en polymère organique.

Les particules composites de ces suspensions de particules composites présentent les mêmes caractéristiques de diamètre moyen, d'indice de dispersion, de surface spécifique et d'épaisseur de l'écorce ou de la couche de carbonate de calcium que les particules composites définies précédemment.

La phase liquide est une phase aqueuse ou éventuellement hydroalcoolique.

L'invention concerne également des suspensions comprenant des particules creuses constituées d'une écorce en carbonate de calcium. La phase liquide est en général aqueuse ou hydroalcoolique.

Les particules creuses de ces suspensions de particules creuses présentent les mêmes caractéristiques de diamètre moyen, d'indice de dispersion, de surface spécifique et d'épaisseur de l'écorce que les particules creuses définies précédemment.

Le procédé de préparation d'une suspension de particules composites selon l'invention comprend les étapes suivantes :

- on met en présence un latex avec du dihydroxyde de calcium,

- on ajoute du dioxyde de carbone au mélange de latex et de dihydroxyde de calcium obtenu précédemment ce par quoi du carbonate de calcium précipite sur les particules de latex.

La phase liquide de ce latex de départ est en général une phase aqueuse et préférentiellement de l'eau. Dans le cas où les latex ont été obtenus par copolymérisation en dispersion de monomères organiques, la phase liquide peut être hydroalcoolique.

La nature des particules de latex est du type de celle des polymères des particules composites définies précédemment.

Le dihydroxyde de calcium se présente de manière préférentielle sous la forme d'une suspension de particules de dihydroxyde de calcium de taille variable. Cette suspension de dihydroxyde de calcium peut être obtenue par différents moyens: à partir d'oxyde de calcium ou à partir d'un sel de calcium additionné d'une base (NaOH, KOH, $NH_3$).

On préférera les suspensions de dihydroxyde de calcium sous forme de laits de chaux. L'utilisation de dihydroxyde de calcium obtenu à partir d'oxyde de calcium permet en effet d'éviter la présence d'impuretés dans le carbonate de calcium précipité à la surface des particules du latex contrairement aux suspensions issues de sels de calcium, par exemple, qui apportent des ions en solution tels que $Cl^-$, $NO_3^-$. Elle permet aussi un meilleur contrôle de l'état de dispersion des particules composites en minimisant la force ionique.

La concentration en particules de la suspension de dihydroxyde de calcium peut avantageusement être comprise entre 0,1 et 3 mole/kg.

Sa viscosité pourra varier entre 0,05 et 0,5 Pa/s (viscosité mesurée à 50 s$^{-1}$).

La mise en oeuvre du procédé consiste à mélanger le latex et la suspension de dihydroxyde de calcium. Ce mélange peut se faire dans un ordre quelconque. Puis on introduit du dioxyde de carbone sous forme gazeuse dans ce mélange ce par quoi on forme du carbonate de calcium qui précipite sur les particules de latex en suspension dans le mélange.

Afin de conserver la stabilité du latex au cours du procédé et d'éviter sa floculation, on ajoute généralement un stabilisant au latex avant sa mise en présence avec le dihydroxyde de calcium.

On peut choisir comme stabilisant un tensioactif non ionique du type : alkylphénol éthoxylé, polyéthylène glycol, polyvynylpyrolidone.

On ajoute généralement 1 à 50 g de stabilisant par kg de latex, et préférentiellement moins de 20 g/kg.

Dans le cas où un stabilisant type tensioactif est ajouté au mélange réactionnel afin de stabiliser le latex, il peut être nécessaire d'ajouter simultanément un anti-mousse pour éviter la présence trop importante de bulles.

Selon une première variante du procédé, il est possible d'introduire un inhibiteur de croissance du carbonate de calcium dans le mélange de latex et de dihydroxyde de calcium. Cet inhibiteur permet de contrôler l'épaisseur de la couche de carbonate de calcium précipité à la surface des particules de latex.

Il pourra être choisi parmi l'acide citrique, les citrates, les agents à base de phosphates et parmi les stabilisants du latex définis plus haut.

L'inhibiteur est introduit dans le mélange réactionnel avant le dioxyde de carbone.

Le procédé selon l'invention sera avantageusement mis en oeuvre à une température comprise entre 20 et 40°C. Le choix de la température permet de jouer sur la surface spécifique finale de la couche de carbonate de calcium des particules dans la mesure où plus la température sera élevée, plus la taille des particules de carbonate de calcium précipité déposées à la surface des particules de latex sera importante.

Au cours du procédé selon l'invention, le dioxyde de carbone sera préférentiellement introduit sous la forme d'un mélange gazeux dioxyde de carbone/air ou azote dans un rapport compris entre 5 et 50% en volume de préférence de l'ordre de 30%. L'ajout du dioxyde de carbone se fait généralement en laissant buller le mélange gazeux dans le mélange de latex et de dihydroxyde de calcium.

Le dioxyde de carbone sera habituellement introduit dans le mélange de latex et de dihydroxyde de calcium avec un débit compris entre 40 ml/h/kg et 200 l/h/kg de mélange de latex et de dihydroxyde de calcium. Le débit peut évoluer en fonction de la quantité de latex à traiter et l'épaisseur de la couche de carbonate de calcium que l'on désire précipiter sur les particules de latex.

Selon une deuxième variante du procédé, ce dernier peut comprendre une étape supplémentaire de mûrissement après la précipitation du carbonate de calcium sur les particules de latex. Il a pour objet de créer une couche plus sphérique du carbonate de calcium sur les particules de latex et de diminuer la surface spécifique de cette couche de carbonate de calcium à la surface des particules de latex. Cette étape de mûrissement est effectuée en chauffant le milieu réactionnel ou simplement en le laissant reposer à la température de la réaction.

L'invention concerne aussi un procédé de préparation des particules composites polymère organique - cabonate de calcium caractérisé en ce qu'on sèche les suspensions obtenues par le procédé décrit précédemment ou l'une de ses variantes.

Selon un mode de réalisation préféré de l'invention la séparation des particules composites du mélange réactionnel et leur séchage se font par atomisation, c'est à dire par pulvérisation du mélange dans une atmosphère chaude (spray-drying). L'atomisation peut être réalisée au moyen de tout pulvérisateur connu en soi, par exemple par une buse de pulvérisation du type pomme d'arrosoir ou autre. On peut également utiliser des atomiseurs dits à turbine. Sur les diverses techniques de pulvérisation susceptibles d'être mises en oeuvre dans le présent procédé, on pourra se référer notamment à l'ouvrage de base de MASTERS intitulé "SPRAY-DRYING" (deuxième édition, 1976, Editions George Godwin - London).

On notera que l'on peut également mettre en oeuvre l'opération d'atomisation-séchage au moyen d'un réacteur "flash", par exemple du type mis au point par la Demanderesse et décrit notamment dans les demandes de brevet français n° 2 257 326, 2 419 754 et 2 431 321. Dans ce cas, les gaz traitants (gaz chauds) sont animés d'un mouvement hélicoïdal et s'écoulent dans un puits-tourbillon. Le mélange à sécher est injecté suivant une trajectoire confondue avec l'axe de symétrie des trajectoires hélicoïdales desdits gaz, ce qui permet de transférer parfaitement la quantité de mouvement des gaz au mélange à traiter. Les gaz assurent ainsi en fait une double fonction : d'une part la pulvérisation, c'est à dire la transformation en fines gouttelettes, du mélange initial, et d'autre part le séchage des gouttelettes obtenues. Par ailleurs, le temps de séjour extrêmement faible (généralement inférieur à 1/10 de seconde environ) des particules dans le réacteur présente pour avantage, entre autres, de limiter d'éventuels risques de surchauffe par suite d'un contact trop long avec les gaz chauds.

Selon les débits respectifs des gaz et du mélange à sécher, la température d'entrée des gaz est comprise entre 400 et 900°C et plus particulièrement entre 600 et 800°C, la température du solide séché entre 150 et 300°C.

En ce qui concerne le réacteur flash mentionné plus haut, on pourra notamment se référer à la figure 1 de la demande de brevet français 2 431 321.

Celui-ci est constitué d'une chambre de combustion et d'une chambre de contact composée d'un bicône ou d'un cône tronqué dont la partie supérieure diverge. La chambre de combustion débouche dans la chambre de contact par un passage réduit.

La partie supérieure de la chambre de combustion est munie d'une ouverture permettant l'introduction de la phase combustible.

D'autre part la chambre de combustion comprend un cylindre interne coaxial, définissant ainsi à l'intérieur de celle-ci une zone centrale et une zone périphérique annulaire, présentant des perforations se situant pour la plupart vers la partie supérieure de l'appareil. La chambre comprend au minimum six perforations distribuées sur au moins un cercle, mais de préférence sur plusieurs cercles espacés axialement. La surface totale des perforations localisées dans la partie inférieure de la chambre peut être très faible, de l'ordre de 1/10 à 1/100 de la surface totale des perforations dudit cylindre interne coaxial.

Les perforations sont habituellement circulaires et présentent une épaisseur très faible. De préférence, le rapport du diamètre de celles-ci à l'épaisseur de la paroi est d'au moins 5, l'épaisseur minimale de la paroi étant seulement limitée par les impératifs mécaniques.

Enfin, un tuyau coudé débouche dans le passage réduit, dont l'extrémité s'ouvre dans l'axe de la zone centrale.

La phase gazeuse animée d'un mouvement hélicoïdal (par la suite appelée phase hélicoïdale) est composée d'un gaz, généralement de l'air, introduit dans un orifice pratiqué dans la zone annulaire, de préférence cet orifice est situé dans la partie inférieure de ladite zone.

Afin d'obtenir une phase hélicoïdale au niveau du passage réduit, la phase gazeuse est de préférence introduite à basse pression dans l'orifice précité, c'est-à-dire à une pression inférieure à 1 bar et plus particulièrement à une pression comprise entre 0,2 et 0,5 bar au-dessus de la pression existant dans la chambre de contact. La vitesse de cette phase hélicoïdale est généralement comprise entre 10 et 100 m/s et de préférence entre 30 et 60 m/s.

Par ailleurs, une phase combustible qui peut être notamment du méthane, est injectée axialement par l'ouverture précitée dans la zone centrale à une vitesse d'environ 100 à 150 m/s.

La phase combustible est enflammée par tout moyen connu, dans la région où le combustible et la phase hélicoïdale sont en contact.

Par la suite, le passage imposé des gaz dans le passage réduit se fait suivant un ensemble de trajectoires confondues avec des familles de génératrices d'un hyperboloïde. Ces génératrices reposent sur une famille de cercles, d'anneaux de petite taille localisés près et au-dessous du passage réduit, avant de diverger dans toutes les directions.

On introduit ensuite le mélange à traiter sous forme de liquide par le tuyau précité. Le liquide est alors fractionné en une multitude de gouttes, chacune d'elle étant transportée par un volume de gaz et soumise à un mouvement créant un effet centrifuge. Habituellement, le débit du liquide est compris entre 0,03 et 10 m/s.

Le rapport entre la quantité de mouvement propre de la phase hélicoïdale et celle du mélange liquide doit être élevé. En particulier il est d'au moins 100 et de préférence compris entre 1000 et 10000. Les quantités de mouvement au niveau du passage réduit sont calculées en fonction des débits d'entrée du gaz et du mélange à traiter, ainsi que de la section dudit passage. Une augmentation des débits entraîne un grossissement de la taille des gouttes.

Dans ces conditions, le mouvement propre des gaz est imposé dans sa direction et son intensité aux gouttes du mélange à traiter, séparées les unes des autres dans la zone de convergence des deux courants. La vitesse du mélange liquide est de plus réduite au minimum nécessaire pour obtenir un flot continu.

Selon un autre mode préféré, l'atomisation est réalisée de telle sorte que la température d'entrée dans l'atomiseur est de l'ordre de 200°C et celle de sortie de 120°C.

On peut éventuellement faire subir aux particules composites en suspension un traitement hydrophobe avant l'opération d'atomisation afin d'éviter leur agglomération au cours de cette étape d'atomisation. Ce traitement hydrophobe s'avère plus ou moins nécessaire en fonction de la nature chimique de l'agent de traitement hydrophobe et de celle du milieu de la suspension.

L'invention concerne en outre le procédé de préparation des particules creuses de carbonate de calcium définies précédemment qui, selon un premier mode de réalisation, est caractérisé en ce qu'on calcine les particules composites composées d'un coeur en polymère organique recouvert de carbonate de calcium. La calcination est réalisée à une température suffisante pour que le coeur de polymère organique des particules composites soit décomposé en gaz. Habituellement cette température est comprise entre 400 et 700°C et est plus particulièrement de 650°C. Par cette calcination, le coeur de polymère organique est entièrement décomposé en gaz qui sont émis à travers l'écorce de carbonate de calcium, créant une particule creuse.

Selon une variante préférée du premier mode de réalisation, les particules composites sont soumises à une élévation de température de l'ordre de 3°C/mn jusqu'à atteindre la température de 650°C. On maintient ensuite les particules à cette température pendant 5 h.

Selon un second mode de réalisation, le procédé de préparation des particules creuses de carbonate de calcium est caractérisé en ce qu'on met les particules composites composées d'un coeur en polymère organique recouvert de carbonate de calcium dans un solvant du polymère organique ce par quoi le coeur de polymère organique est dissous, on centrifuge le mélange et on sèche les particules creuses obtenues. Le séchage est effectuée à une température comprise entre 25 et 200°C.

L'invention concerne enfin l'utilisation des particules composites comme charges ou additifs dans les plastiques et les élastomères.

On utilise ces produits en particulier pour tous les plastiques destinés à être renforcés aux chocs tels que les polyoléfines, les polychlorures de vinyle et leurs dérivés (polyamides, polystyrènes,...).

On constate que l'introduction de particules composites selon l'invention apportent aux plastiques simultanément une bonne rigidité et une plus grande résistance aux chocs.

On utilise également ces particules dans les élastomères tels que le caoutchouc naturel, le polyisoprène, le polybutadiène et les copolymères de butadiène et de styrène.

On constate que l'introduction de particules composites selon l'invention apportent aux élastomères de la souplesse à basse température.

L'invention concerne l'utilisation des particules creuses comme charges dans les élastomères. On utilise de préférence ces particules dans les mêmes élastomères que ceux définis précédemment.

On constate que les élastomères et en particulier les pneumatiques acquièrent une plus grande souplesse à basse température suite à l'introduction de particules creuses selon l'invention dans la matrice.

Des exemples vont maintenant être donnés.

EXEMPLE 1

Le latex utilisé est de type SB112 commercialisé par Rhône-Poulenc, c'est un ter polymère anionique styrène / butadiène / acrylamide de Tg $\cong$ 0°C.

Comme stabilisant de ce latex on utilise le tensioactif : Cémulsol NP30 qui est le nonylphénol éthoxylé.

Conditions opératoires :

T = 25°C

| Réactifs | Masse des réactifs ou débit | Caractéristiques |
|---|---|---|
| latex SB112 en suspension dans l'eau à 30,25% d'extrait sec | 74,10 g | diamètre moyen = 135 nm |
| lait de chaux à 2,76 mole/kg en $Ca(OH)_2$ | 18,28 g | viscosité = 0,05 Pa/s |
| eau épurée | 904,51 g | |
| Cémulsol NP30 | 3,11 g | |
| $CO_2$ sous forme mélange $CO_2$/air à 30% de $CO_2$ | 40 ml/h/kg | |

Dans un réacteur, on introduit le latex SB112, puis on ajoute sous agitation un mélange préalablement préparé, contenant le Cémulsol NP30 et l'eau épurée. On verse ensuite le lait de chaux dans le mélange réactionnel et on fait buller le dioxyde de carbone. L'agitation est maintenue pendant toute la réaction.

On mesure en parallèle la résistivité du mélange. Lorsque celle-ci devient supérieure à 0,5 k$\Omega$, le bullage de $CO_2$ est arrêté.

On obtient une suspension de particules composites comprenant un coeur en polymère organique recouvert de carbonate de calcium parfaitement individualisées de diamètre 140 nm mesuré par MET.

L'indice de dispersion est de 0,4

La concentration de la suspension est de 2,7% en poids.

EXEMPLE 2

Obtention d'une dispersion selon l'invention

Les réactifs utilisés sont les mêmes que dans l'exemple 1.

On ajoute par contre ici un anti-mousse sous la forme du Rhodorsyl® commercialisé par Rhône-Poulenc en raison de la formation de mousses.

| Réactifs | Masse des réactifs ou débit | Caractéristiques |
|---|---|---|
| latex SB112 à 60% d'extrait sec | 212,5 g | Diamètre moyen = 135nm |
| Cémulsol NP30 | 17,7 g | |
| Rhodorsyl : émulsion à 10% d'extrait sec | 30 g | |
| eau épurée | 212,5 g | |
| lait de chaux à 3,096 mole/kg en $Ca(OH)_2$ | 590 g | vicosité = 0,05 Pa/s |
| $CO_2$ sous forme mélange $CO_2/N_2$ à 10% de $CO_2$ | 220 l/h/kg | |

Dans un réacteur, on introduit le latex SB112, puis on ajoute sous agitation un mélange préalablement préparé, contenant le Cémulsol, l'eau épurée et le Rhodorsyl. On verse ensuite le lait de chaux dans le mélange réactionnel et on fait buller le dioxyde de carbone. L'agitation est maintenue pendant toute la réaction.

On mesure en parallèle la résistivité du mélange. Lorsque celle-ci devient supérieure à 0,500 k$\Omega$, ce qui correspond à une réaction de 5 h, le bullage de $CO_2$ est arrêté.

On obtient une suspension de particules composites comprenant un coeur en polymère organique recouvert de carbonate de calcium parfaitement individualisées de diamètre 160 nm mesuré par MET.

La concentration de la suspension en particules composites est de 30% en poids.

Le taux de carbone minéral de la suspension des particules composites est de 15,8 g/l soit une concentration en $CaCO_3$ de 132,5 g/l.

EXEMPLE 3

Obtention d'une suspension selon l'invention :

Les réactifs utilisés sont les mêmes que dans l'exemple 1.

Conditions opératoires :

T = 25°C

| Réactifs | Masse des réactifs ou débit | Caractéristiques |
|---|---|---|
| latex SB112 en suspension à 30,25% | 71,4 g | diamètre moyen = 135 nm |
| lait de chaux à 2,80 moles de $Ca(OH)_2$/kg | 47,5 g | viscosité = 0,05 Pa/s |
| eau épurée | 927,76 g | |
| Cémulsol NP30 | 3,14 g | |
| $CO_2$ sous forme mélange $CO_2/N_2$ à 30% de $CO_2$ | 220 l/h/kg | |

Dans un réacteur, on introduit le latex SB112, puis on ajoute sous agitation un mélange préalablement préparé, contenant le Cémulsol et l'eau épurée. On verse ensuite le lait de chaux dans le mélange réactionnel et on fait buller le dioxyde de carbone. L'agitation est maintenue pendant toute la réaction.

On mesure en parallèle la résistivité du mélange. Lorsque celle-ci devient supérieure à 0,500 k$\Omega$, le bullage de $CO_2$ est arrêté.

On obtient une suspension de particules composites comprenant un coeur en polymère organique recouvert de carbonate de calcium parfaitement individualisées de diamètre 145 nm mesuré par MET. L'épaisseur théorique de la couche de carbonate de calcium est de 5 nm.

La concentration de la suspension est de 3,2% en poids.

EXEMPLE 4

Obtention d'une suspension selon l'invention :

Les réactifs utilisés sont les mêmes que dans l'exemple 1.

Conditions opératoires :

T = 25°C

| Réactifs | Masse des réactifs ou débit | Caractéristiques |
|---|---|---|
| latex SB112 en suspension à 29,57% | 75,89 g | diamètre moyen = 135 nm |
| lait de chaux à 2,80 moles de $Ca(OH)_2$/kg | 56,42 g | viscosité = 0,05 Pa/s |
| eau épurée | 918,02 g | |
| Cémulsol NP30 | 3,16 g | |
| $CO_2$ sous forme mélange $CO_2/N_2$ à 30% de $CO_2$ | 220 l/h/kg | |

Dans un réacteur, on introduit le latex SB112, puis on ajoute sous agitation un mélange préalablement préparé, contenant le Cémulsol et l'eau épurée. On verse ensuite le lait de chaux dans le mélange réactionnel et on fait buller le dioxyde de carbone. L'agitation est maintenue pendant toute la réaction.

On mesure en parallèle la résistivité du mélange. Lorsque celle-ci devient supérieure à 0,5 k$\Omega$, le bullage de $CO_2$ est arrêté.

On obtient une suspension de particules composites comprenant un coeur en polymère organique recouvert de carbonate de calcium parfaitement individualisées de diamètre 155 nm mesuré par MET. L'épaisseur théorique de la couche de carbonate de calcium est de 10 nm.

La concentration de la suspension en particules composites est de 3,6% en poids.

## EXEMPLE 5

Obtention d'une suspension selon l'invention :

Les réactifs utilisés sont les mêmes que dans l'exemple 1.

Conditions opératoires :

T = 25°C

| Réactifs | Masse des réactifs ou débit | Caractéristiques |
|---|---|---|
| latex SB112 en suspension à 30,25% | 74,04 g | diamètre moyen = 135 nm |
| lait de chaux à 2,80 moles de $Ca(OH)_2$/kg | 113,21 g | viscosité = 0,05 Pa/s |
| eau épurée | 861,23 g | |
| Cémulsol NP30 | 3,16 g | |
| $CO_2$ sous forme mélange $CO_2/N_2$ à 30% de $CO_2$ | 220 l/h/kg | |

Dans un réacteur, on introduit le latex SB112, puis on ajoute sous agitation un mélange préalablement préparé, contenant le Cémulsol et l'eau épurée. On verse ensuite le lait de chaux dans le mélange réactionnel et on fait buller le dioxyde de carbone. L'agitation est maintenue pendant toute la réaction.

On mesure en parallèle la résistivité du mélange. Lorsque celle-ci devient supérieure à 0,5 k$\Omega$, le bullage de $CO_2$ est arrêté.

On obtient une suspension de particules composites comprenant un coeur en polymère organique recouvert de carbonate de calcium parfaitement individualisées de diamètre 170 nm mesuré par MET.

L'épaisseur théorique de la couche de carbonate de calcium est de 20 nm.

La concentration de la suspension en particules composites est de 5,2% en poids.

## EXEMPLE 6 : obtention de particules composites,

La suspension obtenue dans l'exemple 2 est séchée par un atomiseur Buchi. La température d'entrée est de 207°C et celle de sortie de 122°C.

On obtient une poudre constituée de particules composites sphériques composées d'un coeur en polymère organique recouvert de carbonate de calcium.

EXEMPLE 7 : obtention de particules creuses selon l'invention,

La poudre obtenue dans l'exemple 6 est calcinée à 630°C, la vitesse de montée en température étant de 3°C/mn et la durée du palier à 630°C de 4 heures.
On obtient ainsi des particules creuses en carbonate de calcium de diamètre inférieur à 0,2 µm (par MET).

**Revendications**

1. Particules composites caractérisées en ce qu'elles sont composées d'un coeur en polymère organique au moins en partie recouvert de carbonate de calcium et qu'elles présentent un diamètre moyen d'au plus 5 µm.

2. Particules selon la revendication 1 caractérisées en ce que le carbonate de calcium est sous forme calcite.

3. Particules composites selon l'une des revendications 1 ou 2 caractérisées en ce que le polymère organique est choisi parmi les copolymères styrène-butadiène possédant des fonctions carboxylées, sulfates ou sulfonates et les copolymères styrène-butadiène-acrylamide.

4. Particules composites selon la revendication 3 caractérisées en ce que le polymère organique présente un taux de fonctions carboxylées compris entre 1 et 50% en masse de monomères ionogènes présents dans le polymère organique et un taux de fonction amides inférieur à 5% en masse de monomères ionogènes présents dans le polymère organique.

5. Particules composites selon l'une des revendications 1 à 4 caractérisées en ce que la température de transition vitreuse du polymère organique est comprise entre -80°C et 200°C.

6. Particules creuses constituées d'une écorce en carbonate de calcium d'au plus 5 µm de diamètre moyen.

7. Particules selon l'une des revendications 1 à 6 caractérisées en ce que l'épaisseur de l'écorce ou de la couche en carbonate de calcium est au plus de 200 nm et de préférence comprise entre 5 et 70 nm.

8. Particules selon l'une des revendications 1 à 7 caractérisées en ce qu'elles présentent un indice de dispersion d'au plus 0,50 et de préférence inférieur à 0,30.

9. Particules selon l'une des revendications 1 à 8 caractérisées en ce qu'elles ont un diamètre moyen compris entre 0,1 et 0,3 µm.

10. Particules selon l'une des revendications 1 à 9 caractérisées en ce que leur surface spécifique est comprise entre 1 et 100 m$^2$/g.

11. Suspension de particules composites caractérisée en ce qu'elle comprend des particules composites selon l'une des revendications 1 à 5 ou 7 à 10.

12. Suspension de particules creuses caractérisée en ce qu'elle comprend des particules creuses selon l'une des revendications 6 à 10.

13. Procédé de préparation d'une suspension de particules composites selon la revendication 11 caractérisé en ce qu'il comprend les étapes suivantes :

    - on met en présence un latex avec du dihydroxyde de calcium,

    - on ajoute du dioxyde de carbone au mélange de latex et de dihydroxyde de calcium obtenu précédemment ce par quoi du carbonate de calcium précipite sur les particules du latex.

14. Procédé selon la revendication 13 caractérisé en ce qu'on ajoute un stabilisant au latex avant sa mise en présence avec le dihydroxyde de calcium.

**15.** Procédé selon la revendication 14 caractérisé en ce qu'on ajoute 1 à 50 g de stabilisant par kg de latex, et plus préférentiellement moins de 20 g/kg.

**16.** Procédé selon l'une des revendications 13 à 15 caractérisé en ce qu'on introduit un inhibiteur de croissance du carbonate de calcium dans le mélange de latex et de dihydroxyde de calcium.

**17.** Procédé selon l'une des revendications 13 à 16 caractérisé en ce qu'il est réalisé à une température comprise entre 20 et 40°C.

**18.** Procédé selon l'une des revendications 13 à 17 caractérisé en ce qu'il comprend une étape supplémentaire de mûrissement après la précipitation du carbonate de calcium sur les particules de latex.

**19.** Procédé de préparation de particules composites selon l'une des revendications 1 à 5 ou 7 à 10 caractérisé en ce qu'on sèche les suspensions obtenues par les procédés selon l'une des revendications 13 à 18.

**20.** Procédé de préparation de particules creuses selon les revendication 6 à 10 caractérisé en ce qu'on calcine les particules composites selon l'une des revendications 1 à 5 ou 7 à 10 ou obtenues par le procédé selon la revendication 19.

**21.** Procédé de préparation de particules creuses selon les revendications 6 à 10 caractérisé en ce qu'on met les particules composites selon l'une des revendications 1 à 5 ou 7 à 10 ou obtenues par le procédé selon la revendication 19 dans un solvant du polymère organique ce par quoi le coeur de polymère organique est dissous, on centrifuge le mélange et on sèche les particules creuses obtenues.

**22.** Utilisation des particules composites selon l'une des revendications 1 à 5 ou 7 à 10 ou des particules obtenues par le procédé selon la revendication 19 comme charges ou additifs dans les plastiques et dans les élastomères.

**23.** Utilisation des particules creuses selon les revendications 6 à 10 ou des particules obtenues par le procédé selon les revendications 20 ou 21 comme charges dans les élastomères.

| Office européen | **RAPPORT DE RECHERCHE EUROPEENNE** | Numero de la demande |
|---|---|---|
| des brevets | | EP 95 40 1941 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DATABASE WPI<br>Derwent Publications Ltd., London, GB;<br>AN 84-096950[16]<br>& JP-A-59 041 256 (TOYO SODA MGF KK) 7 Mars 1984<br>* abrégé * | 1,11,13 | C08J3/20<br>C08J3/12<br>C01F11/18 |
| | --- | | |
| A | DATABASE WPI<br>Derwent Publications Ltd., London, GB;<br>AN 93-231655[29]<br>& JP-A-5 154 374 (KAWATETSU KOGYO KK) 22 Juin 1993<br>* abrégé * | 6 | |
| | --- | | |
| A | DATABASE WPI<br>Derwent Publications Ltd., London, GB;<br>AN 80-87565C[49]<br>& JP-A-50 123 574 (MITSUI PETROCHEM IND. KK) 29 Septembre 1975<br>* abrégé * | 6 | |
| | --- | | **DOMAINES TECHNIQUES RECHERCHES (Int.Cl.6)** |
| A | DATABASE WPI<br>Derwent Publications Ltd., London, GB;<br>AN 93-140038[17]<br>& JP-A-5 077 325 (ISUZU MOTORS LTD.) 30 Mars 1993<br>* abrégé * | 1 | C08J<br>C01F<br>C08K<br>C09C |
| | --- | | |
| A | EP-A-0 442 569 (SHELL INTERNATIONAL RESEARCH MAATSCHAPPIJ B.V.)<br>* revendications 1-3 *<br>* page 2, colonne 1, ligne 31 - ligne 34 * | 1,22 | |
| | --- | | |
| | -/-- | | |

Le présent rapport a été établi pour toutes les revendications

| Lieu de la recherche | Date d'achèvement de la recherche | Examinateur |
|---|---|---|
| LA HAYE | 30 Octobre 1995 | Niaounakis, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 0 699 703 A1

Office européen
des brevets

**RAPPORT DE RECHERCHE EUROPEENNE**

Numero de la demande
EP 95 40 1941

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | DATABASE WPI<br>Derwent Publications Ltd., London, GB;<br>AN 79-67333B[37]<br>& JP-A-79 024 399 (TOKUYAMA SODA KK) 21 Août 1979<br>* abrégé * | 1,13 | |
| A | DATABASE WPI<br>Derwent Publications Ltd., London, GB;<br>AN 94-221554[27]<br>& JP-A-6 157 030 (HISHIKO SEKITAN KOGYO KK) 3 Juin 1994<br>* abrégé * | 1,13,22 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 30 Octobre 1995 | Niaounakis, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant